(19) Europäisches Patentamt
European Patent Office
Office européen des brevets

(11) **EP 2 146 315 B1**

(12) **EUROPEAN PATENT SPECIFICATION**

(45) Date of publication and mention
of the grant of the patent:
**10.11.2010 Bulletin 2010/45**

(51) Int Cl.:
*G06T 5/00* (2006.01)       *G06T 5/50* (2006.01)

(21) Application number: **09165451.7**

(22) Date of filing: **14.07.2009**

(54) **Method and device for speckle noise filtering in SAR images**

Verfahren und Vorrichtung zum Filtern des Speckle-Rauschens in SAR Bildern

Procédé et dispositif de filtrage du bruit de speckle dans des images SAR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.07.2008   IT MI20081296**

(43) Date of publication of application:
**20.01.2010   Bulletin 2010/03**

(73) Proprietor: **Galileian Plus s.r.l.**
**00159 Roma (IT)**

(72) Inventors:
• **Aster, Bruno**
**00136 Roma (IT)**
• **Mazzolena, Marco**
**00172 Roma (IT)**

(74) Representative: **Mittler, Enrico**
**Mittler & C. S.r.l.**
**Viale Lombardia, 20**
**20131 Milano (IT)**

(56) References cited:
• **MOLONEY C ED - INSTITUTE OF ELECTRICAL AND ELECTRONICS ENGINEERS: "Smoothing of SAR image speckle noise by multiplicative point estimation filters" PROCEEDINGS OF THE INTERNATIONAL CONFERENCE ON IMAGE PROCESSING (ICIP) LAUSANNE, SEPT. 16 - 19, 1996; [PROCEEDINGS OF THE INTERNATIONAL CONFERENCE ON IMAGE PROCESSING (ICIP)], NEW YORK, IEEE, US, vol. 3, 16 September 1996 (1996-09-16), pages 907-910, XP010202542 ISBN: 978-0-7803-3259-1**

• **BARALDI A ET AL: "An Alternative Form of the Lee Filter for Speckle Suppression in SAR Images" CVGIP GRAPHICAL MODELS AND IMAGE PROCESSING, ACADEMIC PRESS, DULUTH, MA, US, vol. 57, no. 1, 1 January 1995 (1995-01-01), pages 75-78, XP004419056 ISSN: 1077-3169**

• **ARMAND LOPES ET AL: "ADAPTIVE SPECKLE FILTERS AND SCENE HETEROGENEITY" IEEE TRANSACTIONS ON GEOSCIENCE AND REMOTE SENSING, IEEE SERVICE CENTER, PISCATAWAY, NJ, US, vol. 28, no. 6, 1 November 1990 (1990-11-01), pages 992-1000, XP000170738 ISSN: 0196-2892**

• **XIAOWEI LI ET AL: "A novel speckle filtering technique for SAR image" SIGNAL PROCESSING, 2002 6TH INTERNATIONAL CONFERENCE ON AUG. 26-30, 2002, PISCATAWAY, NJ, USA,IEEE, vol. 1, 26 August 2002 (2002-08-26), pages 788-791, XP010628106 ISBN: 978-0-7803-7488-1**

• **MEDEIROS F N S ET AL: "Combined use of MAP estimation and K-means classifier for speckle noise filtering in SAR images" IMAGE ANALYSIS AND INTERPRETATION, 1998 IEEE SOUTHWEST SYMPOSIUM ON TUCSON, AZ, USA 5-7 APRIL 1998, NEW YORK, NY, USA,IEEE, US, 5 April 1998 (1998-04-05), pages 250-255, XP010274978 ISBN: 978-0-7803-4876-9**

**Description**

The present invention relates to a method of filtering SAR images from speckle noise and related device.

As known, a Synthetic Aperture Radar or SAR system produces a two-dimensional image, hereinafter referred to as SAR image. One dimension of the image is named "range", and is the measurement of the in-line-of-sight distance from the radar to the object being illuminated. The other dimension is named "azimuth" and is perpendicular to the range. The intensity of SAR images is subjected to statistic fluctuations, which determine a salt-and-pepper-like texture at visual level, which is named "speckle effect". It is due to the interaction of a coherent (i.e. monochromatic) radiation with the natural medium.

It is known that, in a SAR image affected by speckle noise, the distribution of the resulting reception field module may be modeled with a gamma distribution or statistic.

The probability density of a gamma distribution may be expressed in terms of the gamma function

$$\Gamma(k) = \int_0^\infty x^{k-1} e^{-x} dx \text{ , parameterized in terms of shape and scale (} k \text{ and } \theta \text{ parameters) given by:}$$

$$f(x;k,\theta) = x^{k-1} \frac{e^{-x/\theta}}{\theta^k \Gamma(k)}, \text{ for } x, k, \theta > 0.$$

By virtue of this particular modeling, in the absence of thermal noise, the following quantity may be defined as the radiometric resolution of a SAR image:

$$R_r = 10 \log_{10}\left(1 + \frac{\sigma}{\mu}\right),$$

where $\mu$ and $\sigma$ are the average and standard gamma statistic deviations of the SAR image. The statistic average being equal, the radiometric resolution is worse in case of high standard deviations.

There are two techniques to reduce the speckle noise, i.e. multi-look processes and the application of spatial filters. The multi-look process is typically used during the step of data processing, while spatial filters are applied once the data have been processed and an image has been produced. All methods usable for reducing the speckle noise must deal with often opposite problems: they must attempt to preserve the contrasts and the spatial resolution of the image to be processed while improving radiometric information. With regards to multi-look processes, an average of N independent samples (looks) of the image is made in order to reduce statistic fluctuations: in this case, the standard deviation of the resulting statistic decreases by a factor proportional to $1/\sqrt{N}$ ; however, this occurs to the distinct detriment of the spatial resolution of the image, which is reduced by a factor *N.*

On the other hand, with regards to the spatial techniques of filtering the speckle noise, they fall under two general categories, i.e. non-adaptive filters and adaptive filters. Non-adaptive filters are those which ignore the local ground backscattering properties or the sensor nature, unlike the adaptive filters which instead use a local window for analyzing local image features.

Non-adaptive filters are not ideal for non-uniform zone images because they are not very flexible due to the loss of all local information . In adaptive filters, instead, speckle noise is modeled as a stationary noise, but local backscattering changes due to the type of target reached by the radar are taken into consideration. These filters typically consist in a three-step procedure: firstly, an examination window moves over each pixel of the image; mathematical calculations involving the statistic features of the zone under examination are applied; the value of the central pixel is replaced with the value calculated in the previous step. The visual effect of these filters is to create a more regular image, thus decreasing the salt-and-pepper speckle effect and maintaining contrasts and spatial features of the original image as much as possible. Lee, Lee-Sigma, gamma-MAP and Frost filters are the most commonly used adaptive filters. These filters take different statistic models of the noise into consideration and use different formulas to generate the new value to be assigned to the pixel; however, in common they have the concept of finding an accommodation between the value of the pixel under examination and the statistic properties of the surrounding background.

Given the state of the art, it is the object of the present invention to provide a method of filtering SAR images from speckle noise, which is different from the known methods.

In accordance with the present invention, the object is reached by a method of filtering SAR images made by a Synthetic Aperture Radar (SAR) from speckle noise, said method comprising:

- a first step of modeling the speckle noise of at least one set of pixels ($x$) of the SAR image by means of a gamma statistic with radiometric resolution given by $R_r = 10 \log_{10}\left(1 + \dfrac{\sigma}{\mu}\right)$ ,

 where $R_r$ is the radiometric resolution and $\mu$ and $\sigma$ are the average and standard deviations of the gamma statistic, respectively,
- a second step of transforming at least one plurality of pixels ($x$) of the at least one set of pixels of the SAR image into a plurality of filtered pixels ($x'$) by means of a data transfer function given by $x' = G_{\alpha,\beta}(1-x) = (1-(1-x)^\alpha)^\beta$, where $x'$ is the filtered pixel value, $x$ is the pixel value of the SAR image, $\alpha$ and $\beta$ are real parameters,
- setting the invariance of the average $\mu$ of the gamma statistic for the filtered image, comprising said plurality of filtered pixels $x'$, so as $\mu' = (1-(1-\mu)^\alpha)^\beta$, $= \mu$, where $\mu'$ is the value of the average of the gamma statistic related to the filtered image so as to fix the value of the parameter $\beta$ according to the parameter $\alpha$ by the formula

$$\beta(\alpha) = \frac{\log \mu}{\log(1 - (1-\mu)^\alpha)} \, ,$$

- setting the standard deviation $\sigma'$ of the gamma statistic of the filtered image as $\sigma' = \sigma / \sqrt{N}$ , with $N$ being the desired Equivalent Number of Looks at the end of the filtering process,
- setting $\sigma' = \sigma \cdot \Phi$, where $\Phi$ is the decrease factor of the initial deviation $\sigma$ due to the filtering process,

- setting said factor $\Phi$ substantially equal to the transfer function derivative $G_{\alpha,\beta}$ about point $I-\mu$, thus obtaining

$$\Phi(\alpha) = \frac{\alpha\mu \cdot \log \mu \cdot (1-\mu)^{\alpha-1}}{\log(1-(1-\mu)^\alpha)(1-(1-\mu)^\alpha)} = \frac{1}{\sqrt{N}} \, , \quad \text{from which the value of parameter } \alpha \text{ and the consequent}$$

 value of parameter $\beta$ are determined,
- constructing the filtered image with the intensity values of the plurality of filtered pixels $x'$.

The features and advantages of the present invention will be apparent from the following detailed description of a practical embodiment thereof, shown by way of non-limitative example in the accompanying drawings, in which:

 figure 1 shows a filter which implements the method of filtering a SAR image affected by speckle in accordance with the present invention;
 figure 2 shows diagrams for calculating the parameters of a function related to the filtering method in accordance with the present invention;
 figure 3 shows the gamma distribution of a SAR image in a uniform sea zone;
 figure 4 shows the pixel distribution of the SAR image in figure 3 filtered by the method in accordance with the invention;
 figure 5 shows the gamma distribution of a SAR image in a sea zone with oil slicks;
 figure 6 shows the pixel distribution of the SAR image in figure 5 filtered by the method in accordance with the invention.

Hereinafter, a method of filtering SAR images from speckle noise in accordance with the present invention is described. Said method allows to obtain a better radiometric resolution of the SAR image by decreasing the $\sigma/\mu$ ratio of the resolution by reducing the standard deviation $\sigma$.

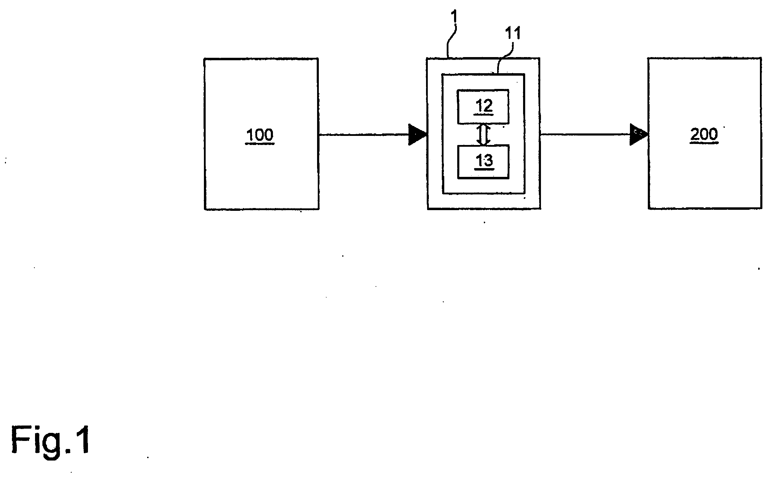

Figure 1 discloses a filter 1 which allows to filter the SAR image 100 from the noise in order to obtain an image filtered from speckle noise 200. Said filter 1 has a transfer function of the following type:

$$G_{\alpha,\beta}(t) = (1 - t^{\alpha})^{\beta},$$

where $\alpha$ and $\beta$ are two real parameters. Said filter comprises a processing device 11 provided with a microprocessor 12 and a memory 13 in which an application software is installed and running; said processing device is adapted to process said input SAR image 100 by means of a filtering process, as defined below, and to provide an image 200 filtered from the speckle noise.

Said filtering method implemented by the application software installed in memory 13, includes modeling the speckle noise of the pixels $x$ of the SAR image by means of a gamma statistic 20 with radiometric resolution given by

$$R_r = 10 \log_{10}\left(1 + \frac{\sigma}{\mu}\right),$$ where $\mu$ and $\sigma$ are the average and standard deviations of the gamma statistic, respectively.

In accordance with the method, the intensity value $x$ of the pixels of the starting image SAR 100 is transformed into an intensity value of the filtered pixel $x'$ of the image 200 by:

$$x' = G_{\alpha,\beta}(1 - x) = (1 - (1 - x)^{\alpha})^{\beta};$$

The transformation occurs for at least one plurality of pixels of the SAR image 100 and in some cases for all the pixels of the SAR image 100.

The check parameters need to be chosen so that the ratio $\sigma/\mu$ is reduced, therefore the average $\mu$ of the gamma statistic 20 related to the image 100 must remain unchanged after the filtering method in accordance with the invention; i.e. the average $\mu'$ related to the gamma distribution 30 of the filtered image 200 remains equal to the average $\mu$ of the gamma distribution 20 related to the SAR image 100. When in the presence of a pixel of the SAR image 100 with intensity value $\mu$, such a value is thus not changed by the transfer function $G_{\alpha,\beta}$ and the filtered pixel will have intensity $\mu'=\mu$. Therefore, by setting the average invariance $\mu$:

$$\mu' = \mu = (1 - (1 - \mu)^{\alpha})^{\beta}.$$

Thereby, once the value of parameter $\alpha$ has been fixed, the corresponding parameter $\beta$ is given by:

$$\beta(\alpha) = \frac{\log \mu}{\log(1 - (1 - \mu)^{\alpha})}.$$

The second relation chosen for calculating the parameter $\alpha$ according to the statistic properties of the image is the setting up of the Equivalent Number of Looks $N$ or ENL which correspond to the application of the method. The number of looks of a radar intensity image is a measurement of the statistic fluctuations introduced by the speckle effect, which result from the interference between the scatterers randomly placed within the resolution cell; more precisely, the number of looks is the number of independent samples of the SAR image which are intended to be used in the filtering process. This is merely an imaging process property and depends on the number of independent image estimates (Single Look Complex) which were joined to form the final image. The speckle statistic is generally described in terms of Equivalent (or Effective) Number of Looks (ENL). Such an index represents the speckle component of the observed intensity; it may be defined as $ENL = \dfrac{\mu^2}{\sigma^2}$, where $\mu$ and $\sigma$ are average and variance of the statistic of the SAR image 100. The resolution of a single image is generally forgone in order to reduce the speckle level for producing a smaller image, in which each pixel is made of the average of a group of $N$ pixels in the original. If the image is not correlated, this averaging process decreases the image variance by a factor $N$, thus increasing the Equivalent Number of Looks by a same factor. Unfortunately, there is usually not much redundant information in a SAR image (unlike an optical image) because objects such as trees, vehicles and buildings typically occupy only one or two pixels at the most; therefore, such an averaging process causes a loss of spatial resolution and information proportional to *N*. The following is set:

$$\sigma' = \sigma/\sqrt{N}$$

where σ' is the standard deviation of the gamma distribution related to the filtered image 200; thereby, the ENL index is being increased by a factor *N* without altering the spatial resolution of the image a priori.

By indicating with Φ the decrease factor of the initial deviation σ due to the process, σ'= σ·Φ, i.e.

$$\Phi = 1/\sqrt{N}\,.$$

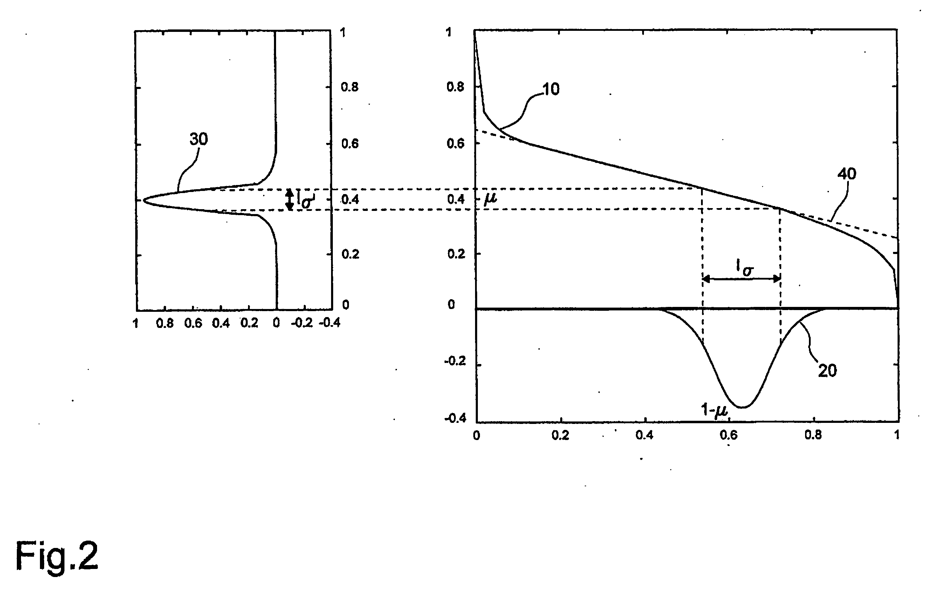

The factor Φ substantially equals the derivative of the transfer function $G_{\alpha,\beta}$ about 1-μ. Figure 2 specifically shows the effect of the transfer function $G_{\alpha,\beta}$ (indicated by 10) on the gamma statistic 20 of the SAR image 100 affected by speckle, upturned and made symmetric with respect to the line *x* = ½, because in the faltering formula the transfer function is applied to intensity 1 - *x* instead of intensity *x.*

The filtering process acts as shown in the figure: each intensity *x* of the gamma distribution 20 is firstly inverted into the value 1 - *x,* and then reflected through the transfer function $G_{\alpha,\beta}$ 10 and replaced by the obtained value *x'*; the overall result is the new filtered gamma distribution 30, shown in the left of figure 2.

$I_{\sigma}$ denotes the interval [1-μ-σ, 1-μ+σ], where μ and σ are the average and standard deviations of the original gamma statistic 20, respectively. Such an interval is filtered in the interval $I_{\sigma}$, by the filtered gamma statistic 30, as shown in the figure.

The dashed line 40 is the tangent of the transfer function in point (1 - μ, μ), the angular coefficient of which is substantially the decrease factor Φ of the initial standard deviation σ. Indeed, such a coefficient is exactly given by the ratio of the lengths of the two intervals,

$$\Phi = \frac{|I_{\sigma'}|}{|I_{\sigma}|}\,,$$

which is excellently approximated by the value of the angular coefficient of tangent 40, as shown in the figure. The transfer fimction $G_{\alpha,\beta}$ is indeed typically very flat about the point (1 - μ, μ), where it may be well represented by its tangent line, of which Φ is the angular coefficient.

By using the previous formulas, the factor Φ is given by:

$$\Phi(\alpha) = \frac{\alpha\mu \cdot \log\mu \cdot (1-\mu)^{\alpha-1}}{\log(1-(1-\mu)^{\alpha})(1-(1-\mu)^{\alpha}}\,,$$

thus, the value of α which equals an ELN number equal to *N* solves the following equation:

$$\Phi(\alpha) = \frac{1}{\sqrt{N}}\,.$$

By determining the intensity values of the pixels *x'*, an image 200 is obtained which exhibits a gamma distribution 30 with a standard deviation σ' reduced with respect to the relative variance σ of the gamma distribution 20 of the starting SAR image 100.

In case of uniform zones, such as sea zones, the process in accordance with the invention may be applied to the whole sea image. The process includes calculating the average $\mu$ and the standard deviation $\sigma$ of the statistic of the sea image and then calculating the value of the parameter $\alpha$, so that the standard deviation $\sigma'$ of the filtered image is sufficiently lower than $\sigma$, and calculating the value of the parameter $\beta(\alpha)$ which allows to derive the value of the intensity $x'$ of the filtered pixel.

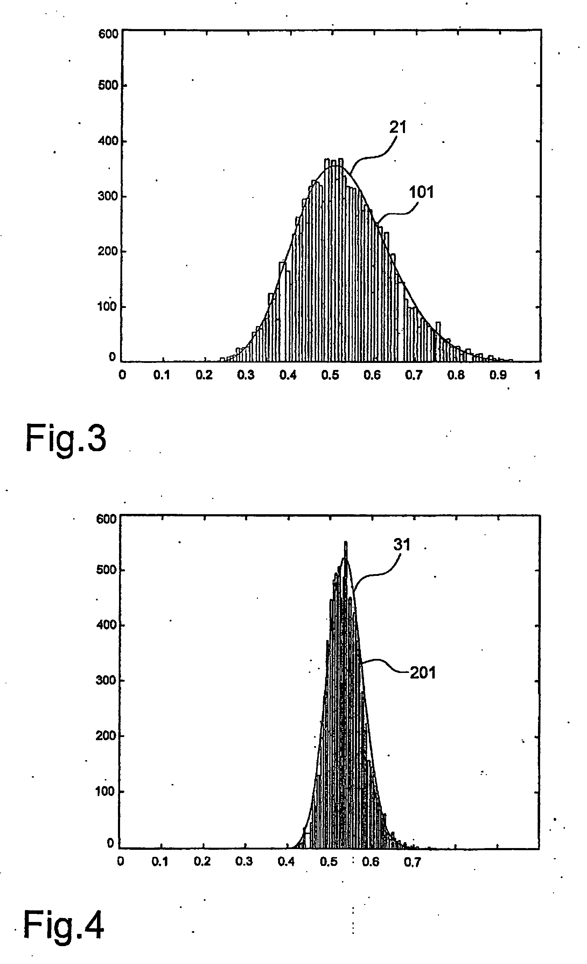

The case of filtering a sea SAR image affected by speckle having histogram 101 may be considered as an example. Figure 3 shows the gamma statistic 21 which best approximates the distribution of the intensities of pixels of such an image, with dynamic rescaled on the interval [0.1]. The statistic parameters are: average $\mu$ = 0.536 and standard deviation $\sigma$ = 0.112. As described for the method in accordance with the invention, from the value of the average $\mu$ of the statistic and once an Equivalent Number of Looks (in this example, $N$ = 8) has been fixed, the following filtering parameter values are obtained: $\alpha$ = 0.106; $\beta$ = 0.245. Figure 4 shows the gamma statistic 31 which best approximates the distribution of the pixel intensity of the filtered image having histogram 201 with the filtering parameters indicated above; the statistic parameters of the filtered image are: average $\mu'$ = 0.536 and standard deviation $\sigma'$ = 0.0415. The filtering method thus keeps the image average unchanged, by decreasing standard deviation so as to increase the radiometric resolution thereof.

If the image relates to a zone with very different radiometric response intensity levels which are easily discernable in the global statistic of the image, the previous algorithm may be selectively applied to different discernable intensity intervals. In such a case, the SAR image related to the aforesaid zone is split up and the process in accordance with the invention is only applied to parts of the concerned image.

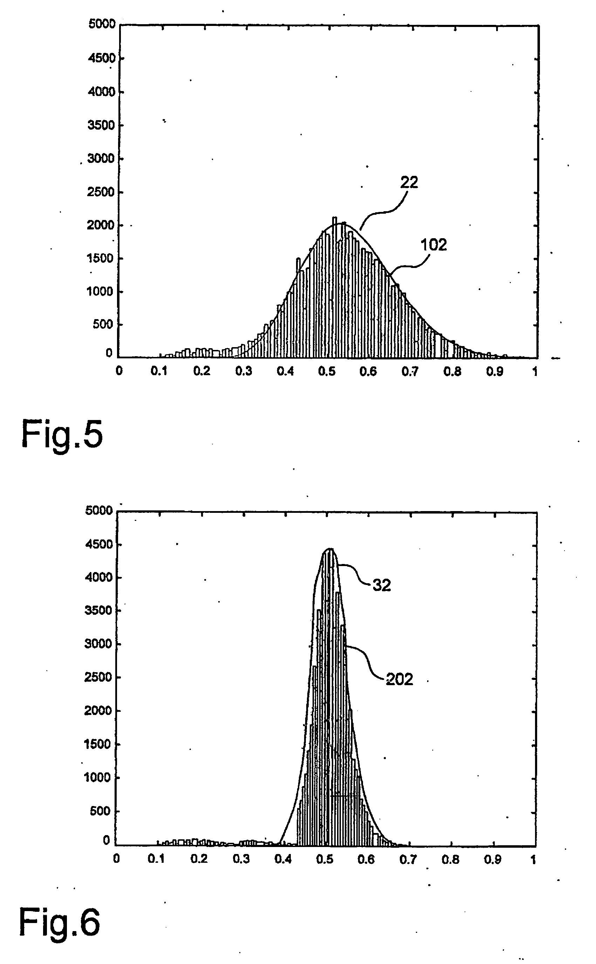

The case of filtering a SAR image of sea with oil slicks affected by speckle and having histogram 102 is considered as an example. Figure 5 shows the distribution of the pixel intensity in such a SAR image with dynamic rescaled on the interval [0.1]. Since the radiometric response of the oil slicks is easily discernable, being much lower than that of the sea, the method is selectively applied to the image by not filtering the points identified as belonging to the oil slick, and operating only on the points belonging to the oil-free sea and affected by speckle. By modeling these points only with a gamma statistic 32, the following statistic parameters are obtained: speckle average, $\mu$ = 0.53; standard deviation of the speckle, $\sigma$ = 0.110. In this method, such an approximation does not take into account the pixels belonging to oil slicks, which indeed are observed as exiting from the left tail of the statistic. From the value of the average $\mu$ of the statistic and once an Equivalent Number of Looks (in this example, $N$ = 8) has been fixed, the following filtering parameter values are obtained: $\alpha$ = 0.1045; $\beta$ = 0.246. Figure 6 shows the filtered image distribution with the filtering parameters indicated above; the statistic parameters of the filtered image are: speckle average $\mu'$ = 0.53 and standard deviation of the speckle $\sigma'$ = 0.0418. Once again, the filtering process keeps the average of the identified zone affected by speckle unchanged, by decreasing the standard deviation thereof. The zones corresponding to the oil slicks were not filtered because they are an information which is important to preserve in the image.

This is an example of the simplified case in which pixels which are not intended to be identified as speckle have an intensity known a priori; therefore, the average $\mu$ and the parameters $\alpha$, $\beta$ of the filtering function are calculated only by means of pixels the intensity $x'$ of which does not fall in the identified interval of concern.

On the other hand, if a signal not belonging to the speckle background but with a priori unknown intensity needs to be reconstructed by statistic methods, the filtering procedure was inserted in a more general procedure which allows to combine the statistic potentials of a Constant False Alarm Rate or CFAR method (described for example in the document to G. Picardi, "Elaborazione del segnale radar", FrancoAngeli Ed., Milan, 1988), with the "geometric" potentials of a Mathematical Morphology application (described in the document to J. Serra, "Image Analysis and Mathematical Morphology", Academic Press, Orlando, 1983), used as one aid for recognizing the extended signals immersed in the speckle noise.

The developed statistic method allows to calculate a merit factor $\lambda \in [0, 1]$ related to the likelihood of the SAR image statistic with an ideal gamma noise statistic.

The parameter $\lambda$ is obtained by means of a close connection between the likelihood theory between probability distributions and the Kullback-Leibler divergence (described in the document to S. Kullback, R.A. Leibler, "On Information and Sufficiency", Annals of Mathematical Statistics, 22, 1951), a fundamental quantity in information theory which quantifies the proximity of two distributions $\{p_i\}$ and $\{q_i\}$ :

$$D_{KL}(p\|q) \equiv \sum_i p_i \, \log_2 \frac{p_i}{q_i} \quad \Rightarrow \quad \lambda \equiv \exp\left(- D_{KL}(p\|q)\right) .$$

The distribution $\{p_i\}$ represents the normalized histogram of the image under examination, while the statistic $\{q_i\}$ is given by the corresponding values of the gamma statistic of best approximation.

A very high likelihood threshold is thus chosen, higher than 90% and preferably of the order of $\lambda \cong 95\%$, to discern between a set of pixels of the SAR image and obtain said merit factor, i.e. the likelihood of the ideal gamma statistic with the SAR image statistic minus the set of discerned pixels.

Once said process has been actuated, the Constant False Alarm Rate method is used to establish another confidence threshold (CFAR threshold) between the speckle background and the pixels identified as "signal", i.e. a CFAR threshold is calculated and the intensity of each of the remaining pixels in the SAR image is compared with said CFAR threshold. A set of pixels of the SAR image which have a lower intensity than the CFAR threshold is obtained.

This two-threshold process is needed because, especially in the case of 16-bit images and thus with broad dynamic, in the presence of large-sized targets, the total statistic of the image greatly differs from that of an ideal gamma (consisting of background pixels only), and thus approximating such a total distribution with a gamma would be statistically incorrect.

Since the signal to be reconstructed often has values which may be lower than the calculated CFAR threshold, a safety window is considered about each pixel over such a threshold, the dimensions of which may be chosen in relation to the estimated size of the targets to be reconstructed, normally a square about the considered pixel which is a pixel having an intensity over the CFAR threshold.

The pixels within such a window, even of intensity below the obtained CFAR threshold, are not filtered a priori but left unchanged for the subsequent analysis.

Indeed, criteria of spatial proximity instead of backscattering intensity are used within this safety zone. Once significant structure elements have been fixed with respect to the target to be reconstructed (typically squares), the morphological opening/closing operations - two of the most common operations in Mathematical Morphology - are applied to the area under examination and a threshold discerns among pixels which spatially respond or not to the criteria dictated by the structuring elements. This process prevents loss of information where the target is extended to and partially submerged by the speckle noise.

In such a case, the method in accordance with the invention thus comprises the following steps before the step of modeling the speckle noise of the at least one set of pixels of the SAR image:

- calculating the SAR image histogram to obtain an image statistic,
- extracting values $\mu$ and $\sigma$ from said histogram to obtain the modeling with an ideal gamma statistic,
- setting a merit factor related to the likelihood of the image statistic with the ideal gamma statistic beyond 90% by means of the equation $\lambda \equiv \exp(-D_{LK}(p\|q))$, where $D_{KL}(p\|q) \equiv \sum_i p_i \log_2 \frac{p_i}{q_i}$ with $p_i$ being the normalized histogram of the SAR image under examination and $q_i$ being the gamma statistic, and $\lambda$ is said merit factor,
- discerning a set of pixels of the SAR image to obtain said merit factor,
- calculating a CFAR threshold and comparing the intensity of each of the remaining pixels of the SAR image with said CFAR threshold,
- calculating safety windows about each pixel over the CFAR threshold and applying Mathematical Morphology operations only for the pixels inside said safety windows,
- obtaining a set of pixels which have a lower intensity than the CFAR threshold and are not within said safety windows and pixels discerned by said Mathematical Morphology operations, said set of pixels being said at least one set of pixels for said first step.

If the SAR image of a zone does not exhibit discernable features, the method in accordance with the invention is locally used by means of movable windows and completed with algorithms for searching for spatial areas with a greater difference of radiometric response and already known in literature, such as for example the Sobel or Canny algorithm. These procedures search for the pixels whereby the grayscale or pixel intensity with respect to the adjacent pixels are higher than a threshold defined by the operator.

More in particular, the Sobel algorithm calculates the discreet differentials of an image, by operating simple convolutions of the image with typically 3x3 matrixes. The Canny algorithm includes, instead, the following sequence of steps: applying a Gaussian filter, calculating the norm of the gradient as for the Sobel algorithm and the corresponding threshold process, and finally running a contrast thinning process (see Canny, J., "A Computational Approach To Edge Detection", IEEE Trans. Pattern Analysis and Machine Intelligence, 8:679-714, 1986).

An operation is then applied in which, for each pixel identified by these contrast search algorithms, a protection area is considered in order to prevent the filtering algorithm from mediating zones belonging to different statistics.

A global analysis on the statistic of the whole image is carried out and a threshold for high-light-intensity pixels which may not be considered as belonging to the speckle statistic is identified by a CFAR method.

Once a mask of these high-contrast and high-intensity pixels has been obtained, i.e. once said pixels have been eliminated from the statistic, a local statistical analysis is carried out on the remaining points with a movable observation window before applying the filtering function.

These local analysis is based on the calculation of the local radiometric properties of the image, specifically the local Equivalent Number of Looks, which for backscattering amplitude image is given by:

$$ENL(x) = \left(0.522 \cdot \frac{\mu 1(x)}{\sigma 1(x)}\right)^2,$$

where $\mu 1(x)$ and $\sigma 1(x)$ are the average and standard deviations of the observation window around the pixel x, respectively (as described, for example, in the article to Lee, Jong-Sen, et alia, "Speckle Filtering of Synthetic Aperture Radar Images: A Review", Remote Sensing Reviews, 8:313-340, 1994).

Such a local radiometry is used as discerning factor between zones with presence of speckles, in which the Equivalent Number of Looks is virtually constant, and zones in which the presence of high backscattering intensity pixels increase standard deviation, differentiating the local radiometry from such a number of looks. The latter zones are suspected to contain information and thus preserved in the filtering process.

Since in the perspective of obtaining a filtering as uniform as possible, the background window is often much larger than that of the strongly scattering elements, such as blocks or buildings, a thinning may be applied to the first radiometry analysis, by adapting the dimensions of the observation window to those of the elements to be identified.

At the end of this pre-processing adapted to identify the pixels which are not to be filtered, the initial image is masked and each pixel the background of which is identified as a speckle is processed, with the parameters $\alpha 1, \beta 1$ depending on the parameters of the local statistic $\mu 1(x)$, $\sigma 1(x)$.

It is worth noting that, especially in the case of 16-bit images, the image dynamic is often much lower than the maximum possible dynamic. In this case, the transfer function $G_{\alpha 1, \beta 1}(x'')$ is no longer flat as a whole at the image dynamic; therefore, the values further away from the local average $\mu 1(x)$ are not filtered so as to meet the requirement given by

$\sigma' = \sigma / \sqrt{N}$. In this case, a change was made to the algorithm which includes, before filtering, a replacement of the intensities of a plurality of pixels with limit value $\hat{x}$ whereby the filtering meets its requirements. Such a limit value was identified, on the basis of geometric properties of the transfer function, as the value $\hat{x}$ whereby

$G'_{\alpha 1, \beta 1}(1 - \hat{x}) = 3/(2\sqrt{N})$ is applied.

Such a limit value, according to the local average $\mu 1$, is excellently approximated by the curve:

$$\hat{x}(\mu 1) = \frac{\mu 1}{7.18 \cdot 10^{-15} \cdot \mu 1^3 + 3.83 \cdot 10^{-11} \cdot \mu 1^2 + 9.74 \cdot 10^{-6} \cdot \mu 1 + 1.834}.$$

Pixels x which undergo this replacement are those to which the following applies:

$$x \leq \hat{x}(\mu 1).$$

The pixels which instead are not recognized as speckles are left unchanged to keep the possible features differentiating them from noise unchanged.

Therefore, in such a case, the method in accordance with the present invention comprises that the first step of modeling the speckle is applied to all pixels x of the SAR image and that the following is carried out before the second step or step of filtering:

-    searching for the pixels of the SAR image whereby the intensity level contrasts with the adjacent pixels are higher than a threshold defined by the user,
-    globally analyzing said gamma statistic by calculating a CFAR threshold and obtaining a first set of pixels of the SAR image pixels which have a lower light intensity than the CFAR threshold and contrasts of intensity levels with the adjacent pixels which are lower than said threshold defined by the user,

- locally analyzing said first set of pixels by calculating the Equivalent Number of Looks ENL given by

$$ENL(x) = \left( 0.522 \cdot \frac{\mu 1(x)}{\sigma 1(x)} \right)^2$$ where $\mu 1(x)$ and $\sigma 1(x)$ are the average and standard deviations of the observation window about the pixels x, respectively, and discerning the pixels of said first set of pixels which have a local Equivalent Number of Look ENL which differs from the other pixels of the first set of pixels which have a substantially constant local Equivalent Number of Looks ENL, thus obtaining a second set of pixels,

- replacing the intensities of a plurality of pixels $x''$ having a value which is either lower than or equal to a limit value

$\hat{x}$ and belonging to said second set of pixels with a limit value $\hat{x}$ whereby $G'_{\alpha 1, \beta 1}(1 - \hat{x}) = 3/(2\sqrt{N})$, where the

values $\alpha 1$ and $\beta 1$ depend on $\mu 1(x)$, said second set of pixels being said at least one plurality of pixels to which said second step is applied.

## Claims

1. A method of filtering SAR images obtained with a Synthetic Aperture Radar SAR from speckle noise, said method comprising the following steps:

   - a first step of modeling the speckle noise of at least one set of pixels of the SAR image by means of a gamma statistic (20) with a radiometric resolution given by $R_r = 10 \log_{10} \left( 1 + \frac{\sigma}{\mu} \right)$, where $R_r$ is the radiometric res-

   olution and $\mu$ and $\sigma$ are the average and standard deviations of the gamma statistic, respectively,
   - a second step of transforming at least one plurality of pixels of the at least one set of pixels of the SAR image into a plurality of filtered pixels by means of a data transfer function given by $x' = G_{\alpha, \beta}(1-x) = (1-(1- x)^\alpha)^\beta$, where $x'$ is the filtered pixel value, $x$ is the pixel value of the SAR image, $\alpha$ and $\beta$ are real parameters,
   - setting the invariance of the average $\mu$ of the gamma statistic for the filtered image, comprising said plurality of filtered pixels $x$, so as $\mu' = (1- (1-\mu)^\alpha)^\beta = \mu$, where $\mu'$ is the value of the average of the gamma statistic (30) related to the filtered image so as to fix the value of the parameter $\beta$ according to the parameter $\alpha$ by the formula

   $$\beta(\alpha) = \frac{\log \mu}{\log(1 - (1 - \mu)^\alpha)},$$

   - setting the standard deviation $\sigma'$ of the gamma statistic related to the filtered image as $\sigma' = \sigma / \sqrt{N}$, with

   $N$ being the Equivalent Number of Looks which is intended to be obtained at the end of the filtering process,
   - setting $\sigma' = \sigma \cdot \Phi$, where $\Phi$ is the decrease factor of the initial deviation $\sigma$ due to the filtering process,
   - setting said factor $\Phi$ as being substantially equal to the transfer function derivative $G_{\alpha, \beta}$ about the point $1-\mu$,

   thus obtaining $\Phi(\alpha) = \frac{\alpha\mu \cdot \log \mu \cdot (1 - \mu)^{\alpha-1}}{\log(1 - (1 - \mu)^\alpha)(1 - (1 - \mu)^\alpha)} = \frac{1}{\sqrt{N}}$, from which the value of the parameter

   $\alpha$ and the consequent value of the parameter $\beta$ may be determined,
   - constructing the filtered image with the intensity values of the plurality of filtered pixels $x'$.

2. A method according to claim 1, **characterized in that** it comprises transforming all the pixels ($x$) of the plurality of pixels of the SAR image into a plurality of filtered pixels ($x'$) by means of a data transfer function given by $x' = G_{\alpha, \beta}(1-x) = (1-(1- x)^\alpha)^\beta$, where $x'$ is the filtered pixel value, $x$ is the pixel value of the SAR image, $\alpha$ and $\beta$ are real parameters.

3. A method according to claim 1, **characterized in that** it comprises, before the first step:

- calculating the SAR image histogram to obtain a statistic of the image,
- extracting the values $\mu$ and $\sigma$ to obtain the modeling with an ideal gamma statistic,
- setting a merit factor related to the likelihood of the image statistic with the ideal gamma statistic beyond 90% by means of the equation $\lambda \equiv \exp(-D_{KL}(p\|q))$, where $D_{KL}(p\|q) \equiv \sum_i p_i \log_2 \dfrac{p_i}{q_i}$ with $p_i$ being the nor-

malized histogram of the examined SAR image and $q_i$ being the gamma statistic, and $\lambda$ is said merit factor,
- discerning a set of pixels of the SAR image to obtain said merit factor,
- calculating a CFAR threshold and comparing the intensity of each of the remaining pixels of the SAR image with said CFAR threshold,
- calculating the safety windows about each pixel having a higher intensity than the CFAR threshold and applying Mathematical Morphology operations only for the pixels within said safety windows,
- obtaining a set of pixels which have a lower intensity than the CFAR threshold and are not within said safety windows, and the pixels discerned by said Mathematical Morphology operations, said set of pixels being said at least one set of pixels for the application of said first step.

**4.** A method according to claim 1, **characterized in that** said first step of modeling the speckle noise is applied to all the pixels (*x*) of the SAR image and **in that** the following is carried out before the second step:

- searching for the pixels of the SAR image whereby the intensity level contrasts with the adjacent pixels are higher than a threshold defined by the user,
- globally analyzing said gamma statistic by calculating a CFAR threshold and obtaining a first set of pixels of the SAR image pixels which have a lower intensity than the CFAR threshold and contrasts of intensity levels with the adjacent pixels which are lower than said threshold defined by the user,

- locally analyzing said first set of pixels by calculating the Equivalent Number of Looks ENL given by

$$ENL(x) = \left( 0.522 \cdot \frac{\mu 1(x)}{\sigma 1(x)} \right)^2$$ where $\mu 1(x)$ and $\sigma 1(x)$ are the average and standard deviations of the observation window about the pixels *x*, respectively, and discerning the pixels of said first set of pixels which have a local Equivalent Number of Look ENL which differs from the other pixels of the first set of pixels which have a substantially constant local Equivalent Number of Looks ENL, thus obtaining a second set of pixels,
- replacing the intensities of a plurality of pixels *x''* having a value which is either lower than or equal to a limit value $\hat{x}$ and belonging to said second set of pixels, said limit value $\hat{x}$ being the value where-

by $G'_{\alpha 1, \beta 1}(1 - \hat{x}) = 3/(2\sqrt{N})$, where the values $\alpha 1$ and $\beta 1$ depend on $\mu 1(x)$, said second set of pixels being said at least one plurality of pixels to which said second step is applied.

**5.** A filtering device of SAR images obtained with a Synthetic Aperture Radar (SAR) from the speckle noise, said device comprising a processing device (11) provided with a microprocessor (12) and a memory (13) in which an application software is installed and running, said device having said SAR image at the input, **characterized in that** said processing device is adapted to process said input SAR image (100) by executing the filtering method as defined in any one of the preceding claims, and provide a filtered image (200) from the speckle noise.

**Patentansprüche**

**1.** Verfahren zum Herausfiltern von Speckle-Rauschen von SAR-Bildern, die durch ein Synthetic Aperture Radar SAR erhalten werden, wobei das Verfahren die Schritte aufweist:

- einen ersten Schritt zum Modellieren des Speckle-Rauschens mindestens eines Pixelsatzes des SAR-Bildes durch eine Gammastatistik (20) mit einer radiometrischen Auflösung, die durch

$$R_r = 10 \log_{10}\left(1 + \frac{\sigma}{\mu}\right)$$

gegeben ist, wobei $R_r$ die radiometrische Auflösung und $\mu$ und $\sigma$ die mittlere bzw. die Standardabweichung der Gammastatistik bezeichnen,

- einen zweiten Schritt zum Umwandeln mindestens einer Vielzahl von Pixeln des mindestens einen Pixelsatzes des SAR-Bildes in mehrere gefilterte Pixel durch eine Datentransferfunktion, die durch $x'=G_{\alpha,\beta}(1-x)=(1-(1-x)^\alpha)^\beta$ gegeben ist, wobei x' den gefilterten Pixelwert, x den Pixelwert des SAR-Bildes und $\alpha$ und $\beta$ reale Parameter bezeichnen,

- Setzen der Invarianz des Mittelwertes $\mu$ der Gammastatistik für das gefilterte Bild, das die mehreren gefilterten Pixel x' aufweist, so dass $\mu'=(1-(1-\mu)^\alpha)^\beta=\mu$ wird, wobei $\mu'$ den Mittelwert der mit dem gefilterten Bild in Beziehung stehenden Gammastatistik (30) bezeichnet, um den Wert des Parameters $\beta$ gemäß dem Parameter $\alpha$ durch

die Formel $\beta(\alpha) = \dfrac{\log \mu}{\log(1-(1-\mu)^\alpha)}$ festzulegen,

- Setzen der Standardabweichung $\sigma'$ der mit dem gefilterten Bild in Beziehung stehenden Gammastatistik als

$\sigma' = \sigma / \sqrt{N}$ , wobei N die äquivalente Anzahl von Looks (Equivalent Number of Looks (ENL)) bezeichnet, die am Ende des Filterprozesses erhalten werden soll,

- Setzen von $\sigma'=\sigma\cdot\Phi$, wobei $\Phi$ den Abnahmefaktor der Anfangsabweichung $\sigma$ aufgrund des Filterprozesses bezeichnet,

- Setzen des Faktors $\Phi$ derart, dass er der Transferfunktionsableitung $G_{\alpha,\beta}$ um den Punkt $1-\mu$ im Wesentlichen gleicht, wodurch

$$\Phi(\alpha) = \frac{\alpha\mu \cdot \log \mu \cdot (1-\mu)^{\alpha-1}}{\log(1-(1-\mu)^\alpha)(1-(1-\mu)^\alpha)} = \frac{1}{\sqrt{N}}$$

erhalten wird, wovon der Wert des Parameters $\alpha$ und der entsprechende Wert des Parameters $\beta$ bestimmbar sind, und

- Konstruieren des gefilterten Bildes mit den Intensitätswerten der mehreren gefilterten Pixel x'.

2. Verfahren nach Anspruch 1, **gekennzeichnet durch** den Schritt zum Umwandeln aller Pixel (x) der mehreren Pixel des SAR-Bildes in mehrere gefilterte Pixel (x') durch eine Datentransferfunktion, die **durch**

$$x'=G_{\alpha,\beta}(1-x)=(1-(1-x)^\alpha)^\beta$$

gegeben ist, wobei x' den gefilterten Pixelwert, x den Pixelwert des SAR-Bildes und $\alpha$ und $\beta$ reale Parameter bezeichnen.

3. Verfahren nach Anspruch 1, **gekennzeichnet durch** die folgenden Schritte, die vor dem ersten Schritt ausgeführt werden:

- Berechnen des SAR-Bild-Histogramms, um eine Statistik des Bildes zu erhalten,
- Extrahieren der Werte $\mu$ und $\sigma$, um die Modellierung mit einer idealen Gammastatistik zu erhalten,
- Setzen eines Merit-Faktors, der mit der Wahrscheinlichkeit der Bildstatistik mit der idealen Gammastatistik in Beziehung steht, auf über 90% durch die Gleichung $\lambda \equiv \exp(-D_{LK}(p\|q))$, wobei

$$D_{KL}(p\|q) = \sum_i p_i \log_2 \frac{p_i}{q_i}$$

ist, wobei $p_1$ das normierte Histogramm des untersuchten SAR-Bildes, $q_1$ die Gammastatistik und $\lambda$ den Merit-Faktor bezeichnen,
- Bestimmen eines Pixelsatzes des SAR-Bildes, um den Merit-Faktor zu erhalten,
- Berechnen eines CFAR-Schwellenwertes und Vergleichen der Intensität jedes der übrigen Pixel des SAR-Bildes mit dem CFAR-Schwellenwert,
- Berechnen von Sicherheitsfenstern um jedes Pixel, das eine höhere Intensität hat als der CFAR-Schwellenwert, und Anwenden mathematischer Morphologieoperationen nur für die Pixel innerhalb der Sicherheitsfenster,
- Bestimmen eines Satzes von Pixeln, die eine niedrigere Intensität haben als der CFAR-Schwellenwert und nicht innerhalb der Sicherheitsfenster liegen, und der **durch** die mathematischen Morphologieoperationen erhaltenen Pixel, wobei der Pixelsatz der mindestens eine Pixelsatz für die Anwendung des ersten Schrittes ist.

4. Verfahren nach Anspruch 1, **dadurch gekennzeichnet, dass** der erste Schritt zum Modellierten des Speckle-Rauschens auf alle Pixel (x) des SAR-Bildes angewendet wird, und **dadurch**, dass die folgenden Schritte vor dem zweiten Schritt ausgeführt werden:

- Suchen von Pixeln des SAR-Bildes, deren Intensitätspegelkontraste bezüglich benachbarten Pixeln höher sind als ein durch einen Benutzer definierter Schwellenwert,
- globale Analysieren der Gammastatistik durch Berechnen eines CFAR-Schwellenwertes und Bestimmen eines ersten Pixelsatzes der SAR-Bildpixel, die eine niedrigere Intensität haben als der CFAR-Schwellenwert und Kontraste von Intensitätspegeln bezüglich benachbarten Pixeln haben, die niedriger sind als der durch den Benutzer definierte Schwerlenwert,

- lokales Analysieren des ersten Pixelsatzes durch Berechnen der äquivalenten Anzahl von Looks (ENL), die

durch $\quad ENL(x) = \left( 0{,}522 \cdot \frac{\mu l(x)}{\sigma l(x)} \right)^2 \quad$ gegeben ist, wobei $\mu l(x)$ und $\sigma l(x)$ die mittlere bzw. die Standardabweichung des Beobachtungsfensters um die Pixel x bezeichnen, und Bestimmen der Pixel des ersten Pixelsatzes, die eine lokale äquivalente Anzahl von Looks ENL aufweisen, die sich von den anderen Pixeln des ersten Pixelsatzes unterscheidet, die eine im Wesentlichen konstante lokale äquivalente Anzahl von Looks ENL aufweisen, um so einen zweiten Pixelsatz zu erhalten,
- Ersetzen der Intensitäten mehrerer Pixel x'' mit einem Wert, der kleiner oder gleich einem Grenzwert $\hat{x}$ ist und dem zweiten Pixelsatz zugeordnet sind, wobei der Grenzwert $\hat{x}$ der Wert ist, gemäß dem

$$G'_{\alpha 1, \beta 1}(1 - \hat{x}) = 3/(2\sqrt{N}) \quad$$ wird, wobei die Werte $\alpha 1$ und $\beta 1$ von $\mu l(x)$ abhängen und der zweite Pixelsatz die mindestens eine Vielzahl von Pixeln ist, auf die der zweite Schritt angewendet wird.

5. Filtervorrichtung zum Herausfiltern von Speckle-Rauschen von SAR-Bildern, die durch ein Synthetic Aperture Radar (SAR) erhalten werden, wobei die Vorrichtung eine Verarbeitungseinrichtung (11) aufweist, die einen Mikroprozessor (12) und einen Speicher (13), in dem ein Anwendungsprogramm gespeichert ist, aufweist und das Programm ausführt, wobei der Vorrichtung das SAR-Bild als Eingangssignal zugeführt wird,
**dadurch gekennzeichnet, dass**
die Verarbeitungseinrichtung dazu geeignet ist, das eingegebene SAR-Bild (100) durch Ausführen des Filterverfahrens nach einem der vorangehenden Ansprüche zu verarbeiten und ein gefiltertes Bild (200) zu erzeugen, in dem das Speckle-Rauschen herausgefiltert ist.

**Revendications**

1. Procédé de filtrage d'images SAR obtenues avec un radar à synthèse d'ouverture, SAR, à partir du bruit modal, ledit procédé comprenant les étapes suivantes :

- une première étape consistant à modéliser le bruit modal d'au moins un ensemble de pixels de l'image SAR au moyen d'une statistique gamma (20) avec une résolution radiométrique donnée par

$$R_r = 10 \log_{10}\left(1 + \frac{\sigma}{\mu}\right),$$ où $R_r$ est la résolution radiométrique et $\mu$ et $\sigma$ sont respectivement l'écart moyen et l'écart type de la statistique gamma,

- une deuxième étape consistant à transformer au moins une pluralité de pixels dudit au moins un ensemble de pixels de l'image SAR en une pluralité de pixels filtrés au moyen d'une fonction de transfert de données donnée par $x' = G_{\alpha,\beta}(1-x)=(1-(1-x)^\alpha)^\beta$, où $x'$ est la valeur du pixel filtré, $x$ est la valeur de pixel de l'image SAR, $\alpha$ et $\beta$ sont des paramètres réels,

- définir l'invariance de la moyenne $\mu$ de la statistique gamma pour l'image filtrée, comprenant ladite pluralité de pixels filtrés $x'$, de telle manière que $\mu'=(1-(1-\mu)^\alpha)^\beta=\mu$ où $\mu'$ est la valeur de la moyenne de la statistique gamma (30) liée à l'image filtrée afin de fixer la valeur du paramètre $\beta$ selon le paramètre $\alpha$ par la formule

$$\beta(\alpha) = \frac{\log\mu}{\log\left(1-\left(1-\mu\right)^\alpha\right)},$$

- définir l'écart type $\sigma'$ de la statistique gamma liée à l'image filtrée de telle manière que $\sigma' = \sigma/\sqrt{N}$, où $N$ est le nombre équivalent de vues (ENL) que l'on souhaite obtenir à la fin du processus de filtrage,

- définir $\sigma' = \sigma\bullet\Phi$, où $\Phi$ est le facteur de réduction de l'écart initial $\sigma$ dû au processus de filtrage,

- définir ledit facteur $\Phi$ comme étant sensiblement égal à la dérivée de fonction de transfert $G_{\alpha,\beta}$ autour du point

$1-\mu$, ce qui donne la relation : $\Phi(\alpha) = \dfrac{\alpha\mu \cdot \log\mu \cdot \left(1-\mu\right)^{\alpha-1}}{\log\left(1-\left(1-\mu\right)^\alpha\right)\left(1-\left(1-\mu\right)^\alpha\right)} = \dfrac{1}{\sqrt{N}}$, à partir de laquelle la valeur du paramètre $\alpha$ et la valeur qui en découle du paramètre $\beta$ peuvent être déterminées,

- construire l'image filtrée avec les valeurs d'intensité de la pluralité de pixels filtrés $x'$.

**2.** Procédé selon la revendication 1, **caractérisé en ce qu'**il comprend l'opération consistant à transformer tous les pixels ($x$) de la pluralité de pixels de l'image SAR en une pluralité de pixels filtrés (x') au moyen d'une fonction de transfert de données donnée par $x'=G_{\alpha,\beta}(1-x)=(1-(1-x)^\alpha)^\beta$, où $x'$ est la valeur du pixel filtré, $x$ est la valeur de pixel de l'image SAR, $\alpha$ et $\beta$ sont des paramètres réels.

**3.** Procédé selon la revendication 1, **caractérisé en ce qu'**il comprend, avant la première étape, les étapes suivantes :

- calculer l'histogramme de l'image SAR pour obtenir une statistique de l'image,
- extraire les valeurs $\mu$ et $\sigma$ pour obtenir la modélisation avec une statistique gamma idéale,
- définir un facteur de mérite lié à la probabilité de la statistique d'image avec la statistique gamma idéale au-delà de 90 % au moyen de l'équation $\lambda \equiv \exp(-D_{KL}(p\|q))$, où $D_{KL}\left(p\|q\right) \equiv \sum_i p_i \log_2 \dfrac{p_i}{q_i}$, $p_i$ étant l'histogramme normalisé de l'image SAR examinée et $q_i$ étant la statistique gamma, $\lambda$ étant ledit facteur de mérite,

- discerner un ensemble de pixels de l'image SAR pour obtenir ledit facteur de mérite,
- calculer un seuil CFAR et comparer l'intensité de chacun des pixels restants de l'image SAR avec ledit seuil CFAR,
- calculer la fenêtre de sécurité autour de chaque pixel ayant une intensité supérieure au seuil CFAR et appliquer des opérations de morphologie mathématique uniquement pour les pixels se trouvant dans ladite fenêtre de sécurité,
- obtenir un ensemble de pixels qui ont une intensité inférieure au seuil CFAR et qui ne se trouvent pas dans la fenêtre de sécurité, et les pixels discernés par lesdites opérations de morphologie mathématique, ledit ensemble de pixels étant ledit au moins un ensemble de pixels pour l'application de ladite première étape.

**4.** Procédé selon la revendication 1, **caractérisé en ce que** ladite première étape de modélisation du bruit modal est appliquée à tous les pixels (*x*) de l'image SAR et **en ce que** les étapes suivantes sont exécutées avant la deuxième étape ;

- chercher les pixels de l'image SAR pour lesquels les contrastes de niveau d'intensité avec les pixels adjacents sont supérieurs à un seuil défini par l'utilisateur,
- analyser de façon globale ladite statistique gamma en calculant un seuil CFAR et en obtenant un premier ensemble de pixels des pixels de l'image SAR qui ont une intensité inférieure au seuil CFAR et des contrastes de niveaux d'intensité avec les pixels adjacents qui sont inférieurs audit seuil défini par l'utilisateur,

- analyser localement ledit premier ensemble de pixels en calculant le nombre équivalent de vues, ENL, donné par $ENL(x) = \left( 0{,}522 \cdot \dfrac{\mu 1(x)}{\sigma 1(x)} \right)^2$ où $\mu 1(x)$ et $\sigma 1(x)$ sont respectivement l'écart moyen et l'écart type de la fenêtre d'observation autour des pixels *x*, et discerner les pixels dudit premier ensemble de pixels qui ont un nombre équivalent de vues, ENL, qui diffère des autres pixels du premier ensemble de pixels qui ont un nombre équivalent de vues, ENL, sensiblement constant, ce qui donne un deuxième ensemble de pixels,
- remplacer les intensités d'une pluralité de pixels *x''* ayant une valeur qui est soit inférieure, soit égale à une valeur limite $\hat{x}$ et appartenant audit deuxième ensemble de pixels, ladite valeur limite $\hat{x}$ étant la valeur par laquelle $G'_{\alpha 1, \beta 1}(1 - \hat{x}) = 3/(2\sqrt{N})$, où les valeurs $\alpha 1$ et $\beta 1$ dépendent de $\mu 1(x)$, ledit deuxième ensemble de pixels étant ladite au moins une pluralité de pixels à laquelle on applique ladite deuxième étape.

5. Dispositif de filtrage d'images SAR obtenues avec un radar à synthèse d'ouverture, SAR, à partir du bruit modal, ledit dispositif comprenant un dispositif de traitement (11) pourvu d'un microprocesseur (12) et d'une mémoire (13) dans lequel un logiciel d'application est installé et fonctionne, ledit dispositif ayant ladite image SAR en entrée, **caractérisé en ce que** ledit dispositif de traitement est adapté pour traiter ladite image SAR d'entrée (100) en exécutant le procédé de filtrage défini dans l'une quelconque des revendications précédentes, et pour fournir une image filtrée (200) à partir du bruit modal.

Fig.1

Fig.2

Fig.3

Fig.4

Fig.5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. Picardi.** Elaborazione del segnale radar. 1988
- **J. Serra.** Image Analysis and Mathematical Morphology. Academic Press, 1983
- **S. Kullback ; R.A. Leibler.** On Information and Sufficiency. *Annals of Mathematical Statistics,* 1951, vol. 22

- **Canny, J.** A Computational Approach To Edge Detection. *IEEE Trans. Pattern Analysis and Machine Intelligence,* 1986, vol. 8, 679-714
- **Lee, Jong-Sen.** Speckle Filtering of Synthetic Aperture Radar Images: A Review. *Remote Sensing Reviews,* 1994, vol. 8, 313-340